# FASCICULE DE BREVET EUROPEEN

(11) **EP 1 363 151 B1**
(45) Date de publication et mention de la délivrance du brevet: **28.06.2006**
(21) Numéro de dépôt: 03291111.7
(22) Date de dépôt: 12.05.2003
(51) Int. Cl.: G02B 7/02

(54) **Support individuel de lentille optique**
Einzelstüzvorrichtung für optische Linse
Individual support for optical lens

(30) Priorité: 14.05.2002 FR 0205930
(43) Date de publication de la demande: 19.11.2003
(73) Titulaire: ESSILOR INTERNATIONAL (Compagnie Générale d'Optique), F-94220 Charenton-le-Pont (FR)
(72) Inventeur: Duon, Jean-Claude, 91590 Mondeville (FR); Couto, Jorge, 94000 Creteil (FR); Fritsch, Claude, 75015 Paris (FR)
(74) Mandataire: Catherine, Alain

(56) Documents cités:
- WO-A-00/14295
- DE-A- 3 838 012
- DE-U- 29 714 231
- GB-A- 538 324
- US-A- 2 532 971
- US-A- 6 154 255

## Description

La présente invention concerne d'une manière générale le traitement de surface des lentilles optiques et, plus particulièrement bien que non exclusivement, des lentilles ophtalmiques correctrices ou protectrices. Elle concerne plus précisément le support de telles lentilles au cours de leur traitement.

Par lentille ophtalmique, on entend dans le cadre de la présente invention et de manière conventionnelle, un palet moulé et/ou usiné en matériau minéral ou synthétique qui présente une face avant convexe et une face arrière concave et dont est ensuite issu, par détourage, un verre de lunettes à monter sur une monture. Avant détourage, la tranche de cette lentille affecte le plus souvent une forme globalement cylindrique, circulaire ou ovale. Mais il n'en est pas systématiquement ainsi, si bien que, dans le cadre de la présente invention, la tranche de la lentille à traiter devra être considérée comme quelconque.

Il est usuel d'appliquer aux lentilles ophtalmiques, après leur mise en forme par moulage ou usinage, un ou plusieurs traitements de surface servant à leur conférer des caractéristiques otiques ou mécaniques particulières telles que des propriétés de résistance à l'abrasion ou antireflet. L'application d'un tel traitement à une lentille ophtalmique implique le plus souvent le dépôt d'au moins une couche de matériau de revêtement sur l'une de ses faces. Souvent aussi la lentille est chauffée à des températures relatives élevées pouvant atteindre 140°C.

En ce qui concerne plus spécialement l'opération de dépôt d'une couche de revêtement, il importe, pour la qualité optique de la lentille traitée, que ce dépôt se fasse avec une très bonne uniformité.

Traditionnellement, lorsqu'il s'agit de déposer une couche mince telle qu'un anti-reflet, ce dépôt est effectué sous vide, comme expliqué par exemple dans le document US-2 532 971, au moyen d'une machine de traitement relativement complexe. Il suffit ici, pour la compréhension de la présente invention, de mentionner succinctement que ce traitement implique en pratique l'installation d'une série de lentilles à traiter sur un support collectif entraîné en rotation à une vitesse relativement modérée, qui est de l'ordre de 50 tours/min. Dans certaines machines, le montage de chaque lentille sur le support collectif s'effectue par l'intermédiaire d'un support individuel comportant d'une part des moyens pour sa fixation amovible sur le support collectif et d'autre part des moyens propres à assurer le maintien de la lentille tout au long de son traitement.

Selon l'enseignement du document US-2 532 971, le support individuel comporte une embase en forme de bague à contour circulaire dont la face extérieure porte les moyens de fixation sur le support collectif et, portés par cette embase, trois plots de maintien de la lentille par sa tranche. L'un de ces plots est fixe par rapport à l'embase (tout en étant éventuellement réglable en position), tandis que les deux autres plots sont reliés à l'embase par l'intermédiaire d'une lame ressort courbe rapportée par son milieu sur la face interne de l'embase et portant à ses deux extrémités libres les deux plots. Ces derniers sont ainsi pourvus d'une mobilité radiale propre à la saisie de la lentille par sa tranche avec un léger serrage élastique.

Il s'est par ailleurs développé, à l'origine pour le traitement d'autres types de substrats tels que des plaquettes de silicium destinées à être utilisées dans le domaine de la microélectronique, une autre technologie de dépôt d'une couche de matériau, procédant par centrifugation et communément appelée en langue anglaise « spin coating ». Il suffit ici, pour la compréhension de la présente invention, de rappeler que suivant cette technologie, on met en rotation sur lui-même le substrat et on dépose sur sa face à traiter une faible quantité du matériau de revêtement. La vitesse de rotation du substrat durant la phase d'étalement du matériau, supérieure à sa vitesse de rotation lors du dépôt de celui-ci, est relativement élevée et est en pratique supérieure à 1000 tours/min, pour assurer une répartition convenable du matériau sur l'ensemble de la face traitée du substrat.

L'application d'un tel traitement par centrifugation à une lentille ophtalmique permet le dépôts de tous types de couches, minces ou épaisses, avec une bonne régularité d'épaisseur et à des cadences relativement élevées. Pour sa mise en oeuvre, il est souvent prévu un support individuel de lentille servant d'interface pour la fixation de la lentille sur une platine tournante. Eu égard aux vitesses de rotation élevées mises en oeuvre, il importe de veiller à la fiabilité de la fixation de la lentille, ce qui implique d'une part que le maintien de la lentille sur son support individuel soit suffisamment précis et solide, et en tout cas résistant aux forces centrifuges, et d'autre part que le support individuel dispose lui-même d'une assise et/ou d'un maintien suffisant sur la platine tournante.

Dans le document DE-38 38 012, il est décrit un support individuel comportant trois éléments de serrage dont chacun est constitué d'un doigt de support qui reçoit la lentille et d'un doigt de serrage qui pince celle-ci. Un dispositif à masselottes permet de faire varier la pression exercée sur la lentille en fonction de la vitesse de rotation. Il en résulte une réalisation particulièrement complexe et donc peu fiable et coûteuse, tant à la fabrication qu'à l'exploitation.

Dans le document WO-00/14295, il a été proposé un support plus épuré et, partant, plus commode de mise en oeuvre. Ce support pour lentille ophtalmique comporte une embase plane en forme de disque ou de couronne et, portés par cette embase, trois plots de maintien de la lentille par sa tranche. Deux de ces plots sont fixes par rapport à l'embase, tandis que le troisième plot est mobile radialement, entre une position intérieure de repos et une plage de positions extérieures actives. Un ressort est agencé entre le plot mobile et l'embase pour exercer un effort de rappel élastique du plot mobile vers sa position de repos, conférant ainsi au plot mobile une élasticité radiale propre à la saisie de la lentille par sa tranche avec un serrage élastique. Plus précisément, dans l'un des modes d'exécution présentés, le ressort est réalisé sous la forme d'une lame élastiquement flexible dont les deux extrémités sont rapportées, par l'intermédiaire de bornes d'encastrement, sur la face supérieure de l'embase et dont le milieu porte le plot mobile. Il faut préciser ici que le terme « d'encastrement » est impropre : en réalité, la lame ressort est simplement arrêtée en rotation sur chaque borne, mais conserve sa mobilité de coulissement suivant sa direction longitudinal, faute de quoi le débattement radial du plot mobile serait extrêmement réduit, voire nul. Il en résulte que la lame ressort est, dans ce contexte, nécessairement séparée des bornes et de l'embase.

Bien que la structure de ce type de support soit relativement simple, certains inconvénients, tenant surtout aux coûts de fabrication et d'exploitation encore élevés qu'implique l'assemblage de composants multiples, subsistent. En particulier, les opérations d'approvisionnement et d'assemblage de ces composants pèsent sur le coût de revient de ces supports. Par ailleurs, le nettoyage du support après chaque traitement, indispensable pour la fiabilité et la qualité du traitement, pèse sur les temps et les coûts des cycles de traitement. Et le coût encore trop élevé de ces supports, ainsi que la difficulté de leur recyclage résultant de leur structure composite, s'oppose à leur utilisation à titre d'accessoire jetable.

Dès lors il est apparu intéressant, tant pour la conservation d'une qualité optimum que pour la réduction des coûts de traitement des lentilles, de concevoir un support à usage unique offrant à la fois les qualités de maintien et de fixation requises, un coût de revient faible et une grande commodité d'emploi.

L'invention a donc pour objet un support individuel de lentille optique du type décrit, par exempte, dans les documents US 2,532,971 ou WO 00/14295 cités plus haut, comportant :
- une embase de forme globalement annulaire ayant un axe central et un plan médian perpendiculaire à cet axe central,
- au moins trois plots ménagés en saillie du bord intérieur de l'embase pour maintenir la lentille par sa tranche, l'un au moins de ces plots étant élastiquement mobile en translation suivant une direction radiale par rapport audit axe, entre une position intérieure de repos et une plage de positions extérieures actives,
- un ressort agencé entre le plot mobile et l'embase pour exercer un effort de rappel élastique du plot mobile vers sa position de repos.

Conformément à l'invention, le support comporte un moyen de blocage axial pour le maintien du plot mobile, au moins lorsqu'il est en position active, dans une position axiale fixe tout en lui laissant sa mobilité radiale, et l'ensemble dudit support, avec l'embase, les plots, le ressort et le moyen de blocage axial, est réalisé en une seule pièce monobloc en matière plastique venue directement de moulage.

On obtient ainsi, à moindre coût puisque obtenu en une seule opération de moulage, un support individuel de lentille exerçant toutes les fonctions souhaitées de maintien de la lentille et de fixation du support sur l'organe correspondant de la machine de traitement utilisée. Le support monobloc ainsi obtenu est compact et facile à manipuler (à la main ou directement par un élément de machine automatisé) sans risque de désassemblage de ses parties constitutives et avec des risques très réduits de détérioration en cas de chute ou de choc intempestifs. En outre, le support ainsi obtenu peut être adapté à tout type de traitement, en particulier par centrifugation ou sous vide, et présentera à cet effet une embase convenablement agencée pour sa fixation sur le type de machine correspondant.

De plus, selon une autre caractéristique essentielle de l'invention, un moyen de blocage axial du plot mobile est prévu pour maintenir, au moins lorsqu'il est en position active, le plot mobile dans une position axiale fixe, par exemple dans le plan médian, tout en lui laissant sa mobilité radiale. Il importe en effet de s'assurer de la rigidité suffisante du plot mobile dans la direction axiale, c'est-à-dire perpendiculairement au plan de l'embase, le seul maintien exercé par le ressort pouvant s'avérer insuffisant à cet égard. Ainsi, le moyen de blocage axial prévient-il les risques de déformation axiale du ressort et du plot mobile (c'est-à-dire les risques d'affaissement vertical pour le cas d'un traitement par centrifugation où la lentille et son support sont placés à l'horizontale) qui entraîneraient une modification de l'assiette de la lentille, voire la rupture de son maintien par le plot mobile, au détriment de la qualité et du bon déroulement du traitement. Cela revêt une importance particulière lorsque, comme le plus souvent, le traitement appliqué à la lentille implique une phase de chauffage à des températures relativement hautes susceptibles d'engendrer un ramollissement de la matière constitutive du support et en particulier des plots et du ressort qui le relie à l'embase.

Dans un mode d'exécution avantageux, le moyen de blocage est réalisé d'un seul tenant moulé avec le reste du support et comporte deux parties à engagement mutuel radial, l'une mobile solidaire du plot mobile et l'autre fixe solidaire de l'embase, agencées pour être désengagées l'une de l'autre en position de repos du plot mobile et pour s'engager l'une avec l'autre en position active. La configuration de désengagement des deux parties du moyen de blocage en position de repos offre le grand avantage d'autoriser le moulage en une seule opération, sans insert, de l'ensemble du support avec les deux parties du moyen de blocage.

Avantageusement alors, le moyen de blocage axial exerce de plus un guidage radial, ses deux parties étant complémentaires pour réaliser, lorsqu'elles sont mutuellement engagées, une liaison glissière radiale

En position active, c'est-à-dire lorsqu'une lentille est en place sur le support ou qu'un opérateur manuel ou automatique agit sur le plot mobile pour mettre en place une lentille, la liaison glissière ainsi formée s'oppose avantageusement à tout basculement intempestif du plot mobile sur lui-même, non seulement autour d'un axe parallèle à l'axe central de l'embase par flexion excessive du ressort, mais également autour d'un axe orthoradial par torsion du ressort.

On prévoit également, selon l'invention, l'utilisation d'un support de ce type pour le traitement de surface d'une lentille, dans laquelle le support, à usage unique, est dédié au traitement d'une lentille unique et est abandonné à l'issue du traitement de cette lentille. Une telle mise en oeuvre à usage unique du support est rendue possible du fait de sa constitution et de son mode d'obtention en une seule pièce monobloc, qui induisent de faibles coûts de fabrication et autorisent un recyclage aisé. On comprend aussi que cet usage unique est avantageux sur le plan de la logistique, principalement en ce qu'il simplifie les manipulations (manuelles ou automatisées du support) et, surtout, évite toute étape de nettoyage du support, au profit de la simplicité et de la fluidité des cycles de traitement et, dès lors, d'un moindre coût d'exploitation.

L'embase porte avantageusement une marque d'identification individuelle du verre permettant un suivi individuel du verre monté sur le support.

Selon une caractéristique avantageuse de l'invention, au moins deux plots étant fixes sur l'embase, les plots sont agencés de telle sorte que, quelle que soit la position du plot mobile sur une course de 6 mm vers l'extérieur depuis sa position de repos, la tranche de la lentille, circulaire, est, par rapport à l'axe central de l'embase, désaxée vers les deux plots fixes. Ainsi, dans le cas d'un traitement par centrifugation au cours duquel le support et le verre qu'il porte sont entraînés en rotation à haute vitesse autour de l'axe central de l'embase du support, le verre n'exerce pas d'effort centrifuge sur le plot mobile à rappel élastique, mais la force centrifuge qui s'exerce sur le verre tend au contraire à plaquer ce dernier en appui contre les plots fixes.

De préférence, l'embase présente une forme aplatie, ayant une dimension axiale (c'est-à-dire une épaisseur) très sensiblement inférieure à sa dimension radiale (c'est-à-dire à sa largeur). Cette caractéristique dimensionnelle offre un double intérêt pour l'utilisation du support dans un traitement de lentille par centrifugation. On obtient tout d'abord une surface d'assise suffisante pour permettre la fixation du support par l'une des deux faces de l'embase sur la platine tournante d'un appareillage de traitement par centrifugation équipé d'un dispositif à ventouse pneumatique, c'est-à-dire présentant une pluralité d'orifices d'aspiration répartis sur une circonférence de la platine pour maintenir l'embase contre la platine par succion de sa face d'appui. De manière générale ; il est possible grâce à cette assise d'admettre les vitesses de rotation élevées, supérieures à 500 tours par minute, qu'imposent un traitement par centrifugation. D'autre part, pour la bonne évacuation centrifuge de l'excès de matière déposée, il est préférable que la dimension axiale, c'est-à-dire l'épaisseur, de l'embase soit la plus réduite possible, tout en restant suffisamment rigide pour la fiabilité et la précision du maintien.

Selon un mode d'exécution avantageux par sa simplicité et son efficacité, en particulier vis-à-vis de l'opération de moulage, le ressort comporte au moins un filament de matière dont le brin neutre s'étend dans un plan parallèle au plan médian de l'embase. De préférence alors, le plan du brin neutre du filament de matière se confond avec le plan médian de l'embase, lequel forme alors avantageusement plan de joint.

En particulier, le ressort peut avantageusement être réalisé sous la forme de deux filaments de matière, symétriques l'un de l'autre par rapport à un plan de symétrie contenant l'axe central de l'embase et la direction de translation du plot mobile.

Chaque filament présente alors de préférence au moins une partie non rectiligne, courbée ou brisée. On augmente ainsi la plage de mobilité élastique radiale du ressort. Cette partie peut par exemple être ondulée, ce qui permet de satisfaire à la fois aux contraintes de moulage et à la recherche d'une élasticité régulière sur une plage large.

Avantageusement encore, lorsque le support est dans son état initial brut de moulage et donc en position de repos, les deux parties du moyen de blocage sont reliées l'une à l'autre par au moins un filet de matière de faible résistance mécanique, c'est-à-dire apte à être rompu par l'exercice d'un effort radial manuel provoquant l'engagement mutuel des deux parties. Les deux parties du moyen de blocage sont ainsi maintenues convenablement calées en regard l'une de l'autre, sans décalage susceptible de nuire à leur engagement mutuel radial. Un effort radial suffisant exercé sur le plot mobile provoque la rupture du filet de matière et, conjointement, l'engagement mutuel des deux parties. Et cet engagement ne sera pas compromis par l'exercice éventuel d'un effort comportant, outre sa composante radiale principale, une composante axiale ou orthoradiale parasite, le filet s'opposant à tout décalage des deux parties tant que l'engagement n'est pas amorcé. Par ailleurs, le filet de matière constitue également un témoin d'intégrité du support, sa rupture trahissant un usage antérieur ou un endommagement lors du stockage ou du transport.

Selon une autre caractéristique avantageuse de l'invention, le matériau constitutif du support est choisi et le ressort est agencé de telle sorte que, pour une température ambiante comprise entre 15°C et 140°C, avec au moins 10 cycles de chauffage flash d'une vingtaine de secondes à 140°C, le module d'élasticité du ressort soit compris entre 3 N/mm et 10 N/mm. Il importe en effet que l'effort de serrage radial exercé par le ressort sur la tranche de la lentille, tout en restant suffisant pour un maintien fiable de la lentille même aux hautes vitesses de rotation, ne soit pas trop élevé, afin de ne pas risquer de déformer, ne serait-ce que localement, la lentille lors d'un traitement à chaud engendrant un ramollissement relatif de la lentille. Les températures de traitement peuvent en effet atteindre 140°C.

D'ailleurs, pour limiter les effets de ramollissement des hautes températures de traitement sur les constituants du support et en particulier le ressort, dont on souhaite conserver la raideur aussi constante que possible, il est préférable de prévoir que le matériau constitutif du support possède une température de transition vitreuse supérieure ou égale à 150°C.

Pour sécuriser le maintien axial de la lentille par les plots, tout en évitant un serrage excessif pour les raisons évoquées précédemment, chaque plot possédant une face d'appui en regard de l'axe de l'embase, l'un au moins des plots possède au moins une encoche sur sa face d'appui.

Pour une adaptation du support à différentes épaisseurs de lentilles, le plot en question peut posséder sur sa face d'appui au moins deux encoches gigognes.

De préférence, pour éviter tout basculement ou fléchissement des plots et de manière générale dans le souci d'une répartition symétrique des efforts, la ou chaque encoche est centrée sur le plan de l'embase.

Par ailleurs, pour éviter ou au moins limiter le contact des plots avec la face traitée de la lentille ou le revêtement déposé sur celle-ci, la ou chaque encoche possède de préférence une profondeur inférieure à 0,5 mm et avantageusement supérieure à 0,2 mm pour qu'elle conserve quelque efficacité.

D'autres caractéristiques et avantages de l'invention apparaîtront à la lecture de la description qui suit d'un mode de réalisation particulier donné à titre d'exemple non limitatif.

Il sera fait référence aux dessins en annexe, parmi lesquels :
- la figure 1 est une vue en perspective d'ensemble montrant, de dessus, un support individuel de lentille optique conforme à l'invention ;
- la figure 2 est une vue partielle à plus petite échelle de la zone II de la figure 1 ;
- la figure 3 est une vue partielle montrant, toujours de dessus mais à plus petite échelle encore, le plot mobile avec son moyen de blocage et de guidage en position de repos ;
- la figure 4 est une vue analogue à la figure 3 où le plot mobile est dans une position active ;
- les figures 5 et 6 sont des vues de dessous, analogues respectivement aux figures 3 et 4 ;
- la figure 7 est une vue analogue à la figure 1, illustrant une variante d'exécution des plots de maintien adaptée aux lentilles à tranche épaisse.

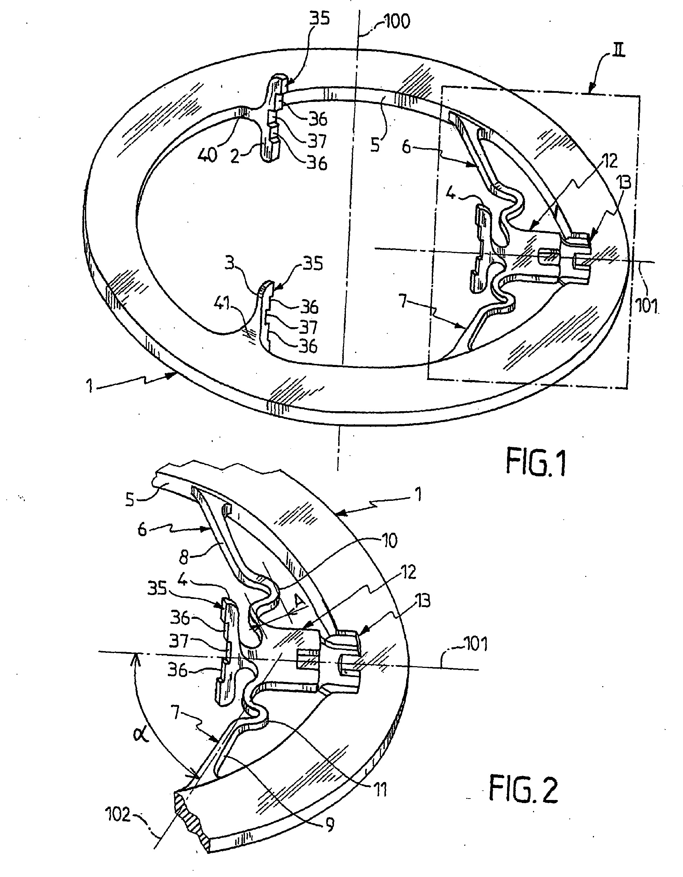

En références aux figures, et en particulier à la figure 1 d'ensemble, un support individuel de lentille optique conforme à l'invention comporte une embase annulaire 1, globalement de révolution autour d'un axe central 100 et possédant un plan médian perpendiculaire à cet axe central.

Dans l'exemple illustré, le support est plus spécifiquement destiné à une utilisation pour un traitement par centrifugation dont les machines nécessitent, pour la fixation du support de lentille sur leur platine tournante (non représentée), une assise de dimension radiale assez large tandis qu'aucune dimension axiale particulière n'est requise. Un tel traitement implique en effet une mise en rotation du support à des vitesses élevées, supérieures à 500 tours par minute.

Au contraire, il est préférable que la dimension axiale, c'est-à-dire l'épaisseur, de l'embase 1 soit la plus réduite possible, tout en restant suffisamment rigide pour la fiabilité et la précision du maintien. En effet, au cours du dépôt par centrifugation, le surplus de matériau est éjecté de la lentille sous forme de gouttelettes à une vitesse d'autant plus importante que la vitesse de rotation est élevée. Dans ce contexte, si le support annulaire est trop épais, son bord intérieur forme une sorte de mur d'enceinte périphérique entourant la lentille et gênant la libre évacuation des gouttelettes, ces dernières rebondissant contre le bord intérieur du support pour retomber sur la lentille. La qualité du traitement, en particulier quant à la régularité du dépôt, s'en trouve affectée.

C'est pourquoi l'embase 1 selon l'invention présente une forme aplatie ayant une dimension axiale (c'est-à-dire une épaisseur) très sensiblement inférieure à sa dimension radiale (c'est-à-dire à sa largeur). On entend par « très sensiblement inférieur », une dimension axiale telle que le rapport entre le diamètre extérieur moins le diamètre intérieur de la rondelle, d'une part et cette dimension axiale d'autre part soit supérieur ou égal à la 10 ». En valeur absolue, l'épaisseur de l'embase 1 est en tout cas inférieure à 5 mm. Il s'agit plus précisément, dans l'exemple proposé, d'une rondelle dont les dimensions sont les suivantes, à 20% près :
- diamètre extérieur : 125 mm
- diamètre intérieur : 90 mm
- épaisseur (suivant la direction de l'axe 100) : 2 mm

Toutefois, pour une adaptation du support à tout type de traitement, en particulier par centrifugation ou sous vide, l'embase pourra présenter toute forme globalement annulaire (rondelle, couronne, bague, etc.) de section quelconque et sera convenablement agencée pour sa fixation sur le type de machine correspondant. Elle pourra ainsi, en particulier, affecter une forme générale de bague ayant une hauteur supérieure à son épaisseur convenant mieux à une utilisation dans une machine de traitement sous vide où la fixation du support de lentille intervient par la face externe de la bague.

Pour le maintien de la lentille par sa tranche, le support est pourvu de trois plots 2, 3 et 4 ménagés en saillie du bord intérieur 5 de l'embase 1. Ces trois plots sont régulièrement répartis autour de l'axe 100, formant ainsi entre eux deux à deux un angle de 120 degrés.

Les plots 2 et 3 sont fixes par rapport à l'embase 1et se raccordent au bord intérieur 5 de celle-ci par des saillies 40 , 41 de ce bord intérieur.

Le plot 4 est élastiquement mobile en translation, radialement par rapport à l'axe 100 c'est-à-dire suivant la direction d'un rayon 101 passant par le centre du plot mobile 4. Un ressort est agencé entre le plot mobile 4 et l'embase 1 pour exercer un effort de rappel élastique du plot mobile 4 vers une position de repos illustrée par la figure 1.

Ce ressort de rappel est réalisé sous la forme de deux filaments de matière 6, 7 dont le brin neutre (i.e. la ligne centrale) s'étend dans le plan médian de l'embase 1. Les deux filaments ressort 6, 7 sont de plus symétriques l'un de l'autre par rapport à un plan de symétrie contenant l'axe central 100 de l'embase 1 et la direction 101 de translation du plot mobile 4. En l'espèce, ces deux filaments 6, 7 présentent une épaisseur légèrement inférieure à celle de l'embase 1.

Chacun des deux filaments 6, 7 se compose de deux parties : une partie sensiblement rectiligne 8, 9 et une partie non rectiligne 10, 11.

La partie rectiligne 8, 9 se raccorde au bord intérieur 5 de l'embase 1 et forme avec le plan de symétrie, du côté intérieur de l'embase, un angle α aigu, qui est en l'espèce de 70 degrés à 20% près.

La partie non rectiligne 10, 11 du filament est adjacente au plot mobile 4. Elle peut être courbée ou brisée et a pour fonction de conférer au plot mobile 4 une plage de mobilité élastique radiale suffisante pour permettre une mise en place commode de la lentille et, éventuellement une adaptation à différents diamètres de lentille. En l'espèce, cette partie non rectiligne 10, 11 est courbée et plus précisément ondulée, ce qui permet de satisfaire à la fois aux contraintes de moulage et à la recherche d'une élasticité régulière sur une plage large. Plus précisément encore, la partie ondulée 10, 11 du filament est constituée d'un pli unique.

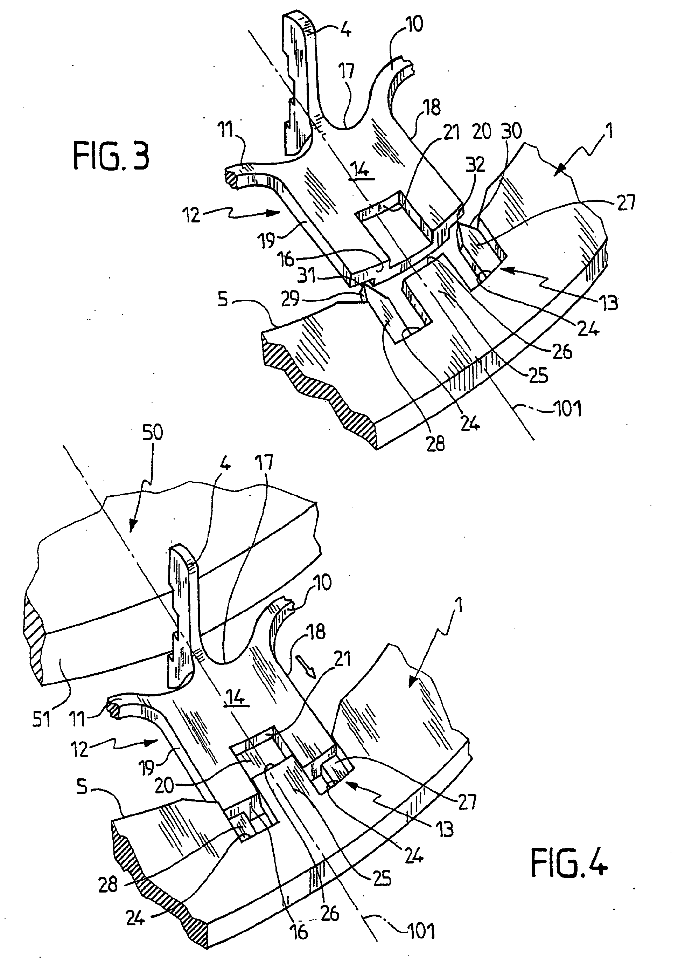

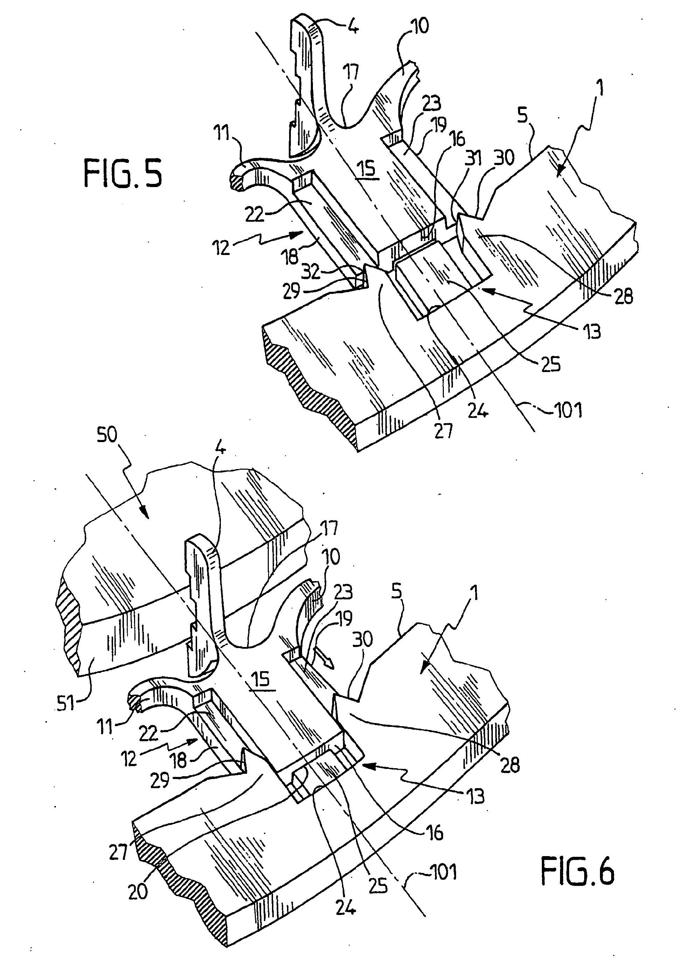

Le plot mobile 4 est ainsi mobile entre une position intérieure de repos illustrée par les figures 1, 2, 3 et 5 et une plage de positions extérieures actives débutant à 1 mm de la position de repos et couvrant les différents diamètres de lentilles envisagés. Les figures 4 et 6 illustrent l'une de ces positions actives.

En pratique, dans la réalisation proposée, les plots sont agencés pour maintenir des lentilles ayant un diamètre sur tranche compris entre 68 et 73 mm, ce qui correspond à une plage de positions extérieures actives de 5 mm. Le plot mobile 4 doit donc disposer, pour exercer sa fonction de préhension par serrage élastique radial, d'une source utile de 5+1=6 mm depuis sa position de repos. Ces valeurs de plage de positions extérieures actives et de course utile sont données à 20% près.

Plus précisément, dans l'exemple proposé les dimensions de chaque filament ressort 6, 7 sont, à 20% près les suivantes :
- le pli unique de la partie ondulée 10, 11 du filament présente une amplitude égale à la course utile du plot mobile 4, soit 6 mm, à 30% près ;
- la longueur de la partie rectiligne 8, 9, mesurée suivant son brin neutre (ou central), est de 20 mm ;
- la longueur développée de la partie ondulée 10, 11, mesurée suivant son brin neutre (ou central), est de 20 mm ;
- l'épaisseur du filament, mesurée suivant la direction de l'axe 100, est constante sur les deux parties et est de 1,5 mm.

En ce qui concerne la largeur, mesurée dans le plan médian de l'embase 1, de chaque filament on pourra prévoir, à 20% près :
- soit une largeur constante sur tout le filament, par exemple de 2 mm, les deux parties, rectiligne et ondulée, ayant alors la même raideur élastique,
- soit des largeurs distinctes pour les deux parties du filament, avec une largeur de partie ondulée 10, 11, par exemple de 1,5 mm, réduite par rapport à celle de la partie rectiligne 8, 9, par exemple de 2,5 mm, la partie rectiligne 8, 9 étant alors sensiblement plus raide que la partie ondulée 10, 11.

D'autres qualités importantes du support selon l'invention sont la fiabilité, la précision et, partant, la fermeté du maintien de la lentille. A cet égard, l'élément déterminant est le plot mobile 4 dont la liaison mobile et élastique à l'embase 1 lui confère par nature une moins bonne rigidité que celle fixe des plots 2 et 3. L'attention a donc été portée sur deux aspects de la liaison du plot mobile 4 à l'embase : la raideur de l'élasticité radiale du ressort 6, 7 d'une part et la résistance à l'affaissement axial et au basculement de plot mobile 4.

C'est donc tout d'abord la raideur du ressort 6, 7 qui doit être convenablement ajustée. Il s'agit en effet de rechercher le meilleur compromis pour que l'effort de serrage radial exercé par le ressort sur la tranche de la lentille, tout en restant suffisant pour un maintien fiable de la lentille même aux hautes vitesses de rotation, ne soit pas trop élevé, afin de ne pas risquer de déformer, ne serait-ce que localement, la lentille lors d'un traitement à chaud engendrant un ramollissement relatif de la lentille.

Concrètement des essais ont permis d'obtenir des résultats satisfaisants pour un module d'élasticité du ressort compris entre 3 et 10 N/mm et le compromis le plus avantageux a été trouvé entre 6 et 8 N/mm. Ces valeurs doivent être obtenues dans les conditions suivantes, à 20% près :
- sur la course prévue de 6 mm vers l'extérieur à partir de sa position de repos et
- au-delà de 1 mm de cette position de repos,
- pour une température ambiante mesurée à proximité du support comprise entre 15°C et 35°C, avec au moins 10 cycles de chauffage flash d'une vingtaine de secondes à 140°C (par chauffage « flash » on entend une montée brusque et de courte durée de la température du support, obtenue par exemple au moyen d'un soufflage d'air chaud).

En pratique, pour obtenir ces valeurs, il est possible d'agir sur deux paramètres :
- le choix du matériau constitutif du support et
- l'agencement (forme et dimensions) des filaments ressort 6, 7.

Il importe ensuite de s'assurer de la rigidité suffisante du plot mobile 4 suivant l'axe central 100 de l'embase 1, le seul maintien exercé par les filaments ressort 6, 7 pouvant s'avérer insuffisant à cet égard. A cet effet, un moyen de blocage axial du plot mobile 4 est prévu pour maintenir, lorsqu'il est en position active, le plot mobile 4 dans une position axiale fixe, c'est-à-dire en l'espèce centré sur le plan de l'embase 1, tout en lui laissant sa mobilité radiale. Ainsi, le moyen de blocage axial prévient-il les risques de déformation axiale du ressort 6, 7 et du plot mobile 4 (c'est-à-dire les risques d'affaissement vertical pour le cas d'un traitement par centrifugation où la lentille et son support sont placés à l'horizontale) qui entraîneraient une modification de l'assiette de la lentille, voire la rupture de son maintien par le plot mobile 4, au détriment de la qualité et du bon déroulement du traitement. Cela revêt une importance particulière lorsque, comme le plus souvent, le traitement appliqué à la lentille implique une phase de chauffage à des températures relativement hautes, pouvant atteindre 140 °C susceptibles d'engendrer un ramollissement de la matière constitutive du support et en particulier du plots mobile 4 et des filaments ressort 6, 7 qui le relient à l'embase 1.

Le moyen de blocage comporte deux parties à engagement mutuel radial, avec une partie mobile 12 solidaire du plot mobile 4 et une partie fixe 13 solidaire de l'embase 1. Plus précisément, la partie fixe 13 forme une glissière d'axe 101 agencée pour recevoir à coulissement la partie mobile 12 qui forme ainsi un tiroir. Le tiroir 12 et la glissière 13 sont symétriques par rapport au plan de symétrie formé par les axes 100 et 101.

On se réfère maintenant pour une meilleure lisibilité des dessins aux figures 3 à 6.

Le tiroir 12 est en forme générale de plaquette. Il possède une face supérieure 14 et une face inférieure 15. Ces faces 14 et 15 sont qualifiées de supérieure et d'inférieure par simple commodité distinctive et par référence aux figures 1 à 4, sans que cela puisse constituer une quelconque limitation, dès lors que le support peut être utilisé d'un côté comme de l'autre et peut être retourné avec la lentille qu'il porte pour un traitement double face de celle-ci. Le tiroir 12 présente en outre un bord extérieur libre 16 cylindrique d'axe 100, un bord intérieur 17 portant le plot mobile 4 et auquel se raccorde la partie ondulée 10, 11 de chacun des filaments 6, 7 et deux bords latéraux 18, 19 parallèles à l'axe 101.

Une encoche 20 est ménagée en renfoncement du bord extérieur 16 et de la face supérieure 14 du tiroir 12. Cette encoche présente ainsi un fond 21 qui est parallèle au bord extérieur 16 et qui en forme un décrochement. Du côté opposé, deux rainures d'angle 22, 23 parallèles à l'axe 101 sont ménagées en renfoncement des bords latéraux 18, 19 et de la face inférieure 15, symétriquement de part et d'autre du plan de symétrie formé par les axes 100 et 101.

La glissière 13 est ménagée dans le corps de l'embase 1, en renfoncement de son bord intérieur 5. Elle comporte un décrochement 24 d'accueil du tiroir 12 et, bordant et délimitant ce décrochement parallèlement à l'axe 101, trois rails 25, 27, 28.

Le rail 25 est centré sur le plan de symétrie formé par les axes 100 et 101 et affleure la face supérieure de l'embase 1. Il présente, suivant l'axe 100, une hauteur inférieure à celle de l'embase 1 et égale à celle de l'encoche 20, si bien que, lorsque le plot mobile 4 est poussé en position active, le rail 25 s'encastre dans l'encoche 20 et forme un butée axiale, suivant l'axe 100, pour le tiroir 14. Le rail 25 possède de plus un bord intérieur libre 26 contre lequel le fond 21 de l'encoche 20 vient en butée pour limiter la course du plot mobile 4. Cette limitation de course évite la détérioration des filaments ressort 6, 7 par déformation excessive. On a vu précédemment que dans l'exemple proposée cette course depuis la position de repos est limitée à 6 mm environ.

Les rails 27, 28 sont ménagés symétriquement de part et d'autre du plan de symétrie formé par les axes 100 et 101 et affleurent la face inférieure de l'embase 1. Chacun des rails 27, 28 présente, suivant l'axe 100, une hauteur inférieure à celle de l'embase 1 et égale à celle des rainures 22, 23, si bien que, lorsque le plot mobile 4 est poussé en position active, les rails 27, 28 s'encastrent dans les rainures 22, 23. Les rails 27, 28 forment ainsi une butée axiale, suivant l'axe 100, pour le tiroir 14 qui est complémentaire de celle formée par le rail 25 dans l'autre sens. De cette manière le tiroir 12 et par conséquent le plot mobile 4 sont immobilisés dans une certaine position suivant l'axe 100 (i.e. en l'espèce verticalement), dans les deux sens (i.e. vers le haut et vers le bas), ce qui permet le retournement du support pour un traitement double face de la lentille. Le tiroir 12 et le plot mobile 4 conservent bien entendu leur mobilité radiale, suivant l'axe 101.

Par ailleurs, pour faciliter la pénétration du tiroir dans la glissière, même avec léger désaxage initial, les rails 27, 28 sont chacun pourvus d'une extrémité intérieure libre chanfreinée 29, 30, en l'espèce en forme de pointe, qui s'étend intérieurement au-delà du bord intérieur 26 du rail 25 pour assurer, le cas échéant, un recalage sur l'axe 101 du tiroir 12 avant la pénétration du rail 25 dans l'encoche 20.

En position de repos du plot mobile 14, le tiroir 12 est désengagé de la glissière 13. Toutefois, dans cette position de repos, le tiroir 12 est en regard de la glissière 13 et son bord extérieur 16 affleure l'entrée de celle-ci, si bien que dès que le tiroir 12 est poussé vers l'extérieur, et en tout cas après une course de 1 mm, en position active, il pénètre dans la glissière 13.

La coopération du tiroir 12 et de la glissière 13 exerce ainsi, en plus du blocage axial, un guidage radial, ses deux parties étant complémentaires pour constituer, lorsqu'elle sont mutuellement engagées, une liaison à coulissement radial. En position active, c'est-à-dire lorsqu'une lentille est en place sur le support ou qu'un opérateur manuel ou automatique agit sur le plot mobile pour mettre en place une lentille, la liaison à coulissement ainsi formée s'oppose avantageusement à tout basculement intempestif du plot mobile sur lui-même, non seulement autour d'un axe parallèle à l'axe central de l'embase par flexion excessive du ressort, mais également autour d'un axe orthoradial par torsion du ressort.

De plus, optionnellement, lorsque le support est dans son état initial brut de moulage et donc en position de repos, le tiroir 12 et la glissière 13 sont reliées l'un à l'autre par deux fins filets de matière 31, 32. En l'espèce ces filets, sont ménagés entre la pointe des extrémités 29, 30 des rails 27, 28 et l'embouchure des rainures 22, 23 sur le bord extérieur 16 du tiroir 15. Ce filet possède une faible résistance mécanique, avec éventuellement un point d'amorce de rupture, ce qui signifie qu'il est apte à être rompu par l'exercice d'un effort radial manuel provoquant l'engagement du tiroir 12 dans la glissière 13. Le support et en particulier son moyen de blocage et de guidage sont ainsi maintenus prêts à l'emploi, le tiroir 12 convenablement calé en regard de la glissière 13 suivant l'axe 101, sans décalage susceptible de nuire à leur engagement mutuel radial. Un effort radial suffisant exercé sur le plot mobile 4 provoque la rupture du filet de matière et, conjointement, l'engagement du tiroir 12 dans la glissière 13. Et cet engagement ne sera pas compromis par l'exercice éventuel d'un effort comportant, outre sa composante radiale principale, une composante axiale ou orthoradiale parasite, le filet de matière s'opposant à tout décalage du tiroir tant que l'engagement n'est pas amorcé. Par ailleurs, le filet de matière constitue également un témoin d'intégrité du support, sa rupture trahissant un usage antérieur ou un endommagement lors du stockage ou du transport.

Les trois plots 2, 3, 4 sont identiques. Chaque plot se présente ici sous la forme d'un doigt allongé, disposé parallèlement à l'axe central 100 de l'embase 1. Plus précisément, dans l'exemple envisagé chacun des plots possède, à 20% près, les dimensions suivantes :
- une hauteur de 16 mm, ce qui permet de couvrir la majeure partie de la plage d'épaisseurs des lentilles ophtalmiques courantes,
- une largeur, mesurée dans le plan médian de l'embase 1 perpendiculairement à la direction radiale de coulissement 101, de 1,5 mm.

Chaque plot possède une face d'appui 35 en regard de l'axe central 100. Cette face d'appui est pourvue d'une ou plusieurs encoches destinées à recevoir le bord de la lentille 50, comme illustré par la figure 6, pour sécuriser le maintien axial (i.e. suivant l'axe 100) de la lentille par les plots 2, 3, 4, tout en évitant un serrage excessif pour les raisons évoquées précédemment.

Dans le mode de réalisation illustré par les figures 1 à 6 et pour une adaptation du support à différentes épaisseurs de lentilles, chaque plot possède sur sa face d'appui deux encoches gigognes 36, 37 de hauteurs différentes, la plus petite 37 étant ménagée dans le fond de la plus grande 36. Ainsi, par exemple, pour traiter des lentilles présentant une épaisseur sur tranche comprise entre 0 et 4 mm, on utilisera un support dans lequel la grande encoche 36 et la petite encoche 37 présentent, suivant l'axe 100 de l'embase 1, des hauteurs respectives de 4 et 2 mm à 20% près. La petite encoche 37 de 2 mm reçoit alors les lentilles d'épaisseur comprise entre 0 et 2 mm, tandis que la grande encoche 36 de 4 mm reçoit les lentilles d'épaisseur comprise entre 2 et 4 mm. Il serait également possible de prévoir davantage d'encoches gigognes, par exemple au nombre de 3, 4 ou même 5.

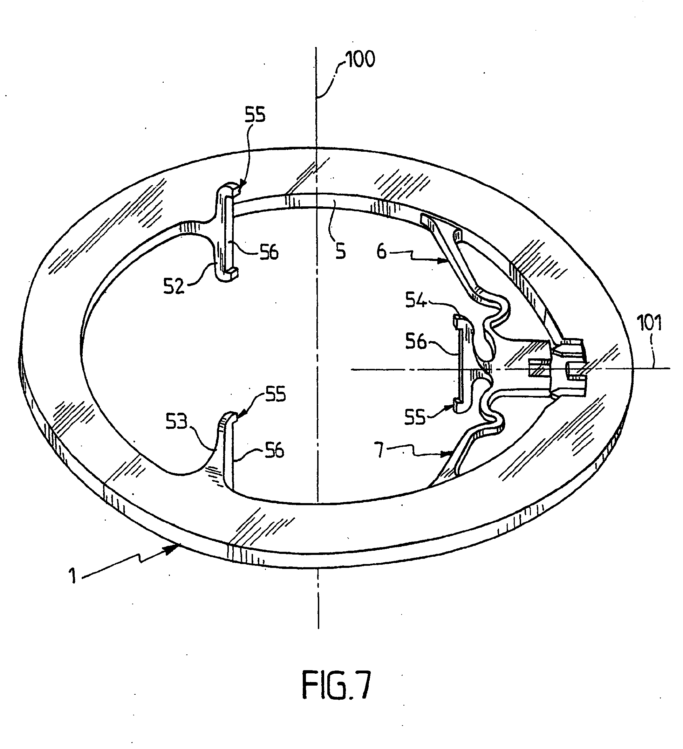

En revanche, comme illustré par la figure 7, pour les lentilles présentant une épaisseur sur tranche supérieure ou égale à la hauteur de la plus grande des deux encoches, c'est-à-dire dans l'exemple pris ci-dessus une épaisseur supérieure ou égale à 4 mm, on utilisera un autre support, par ailleurs identique à celui précédemment décrit, comportant conformément à la figure 7, des plots 52, 53, 54 analogues respectivement aux plots 2, 3, 4 des figures 1 à 6, mais possédant chacun sur leur face d'appui 55 une seule grande encoche 56 s'étendant sur plus des deux tiers de la hauteur totale du plot. Dans l'exemple envisagé, l'encoche 55 présente une hauteur suivant l'axe central 100 de 13 mm à 20% près, chaque plot présentant une hauteur de 16 mm à 20% près.

Quelle que soit la version des plots considérée, à encoche unique ou à encoches multiples, la ou les encoche(s) 36, 37, 56 sont centrées sur le plan médian de l'embase 1. On obtient ainsi une répartition symétrique des efforts, ce qui permet notamment d'éviter tout basculement ou fléchissement des plots et en particulier du plot mobile 4.

Les plots 2, 3, 4 sont agencés de telle sorte que, quelle que soit la position du plot mobile 4 sur sa course de 6 mm vers l'extérieur depuis sa position de repos, la tranche circulaire d'une lentille montée sur le support soit, par rapport à l'axe de rotation du support qui est en l'espèce l'axe central 100 de l'embase, soit axée soit désaxée vers les deux plots fixes 2, 3. Ainsi, dans le cas d'un traitement par centrifugation au cours duquel le support et le verre qu'il porte sont entraînés en rotation à haute vitesse autour de l'axe central 100, le verre n'exerce pas d'effort centrifuge sur le plot mobile 4 à rappel élastique. Mieux, avec un désaxage, la force centrifuge qui s'exerce sur le verre tend au contraire à plaquer ce dernier en appui contre les plots fixes 2, 3.

Par ailleurs, pour éviter ou au moins limiter le contact des plots avec la face traitée de la lentille ou le revêtement déposé sur celle-ci, la ou chaque encoche 36, 37, 56 possède de préférence une profondeur inférieure à 0,5 mm et avantageusement supérieure à 0,2 mm pour qu'elle conserve quelque efficacité. Dans la réalisation proposée, la ou chaque encoche 36, 37, 56 possède une profondeur de 0,3 mm à 10% près.

On notera aussi que, bien que cela ne soit pas parfaitement apparent sur les dessins annexés, il est préférable de prévoir que les tranches interne et externe de l'embase 1, des filaments 6, 7 et des plots 2, 3, 4 soient émoussées pour éviter autant que possible d'opposer des parois perpendiculaires à la trajectoire des gouttes de vernis éjectées des verres, surtout dans le cas d'un traitement par centrifugation.

L'ensemble du support, avec son embase 1, ses plots 2, 3, 4, le ressort 6, 7 et les moyens de blocage et de guidage 12, 13, est réalisée en une seule pièce monobloc en matière plastique venue directement de moulage. Le moulage s'opère avec deux demi-moules réunis suivant un plan de joint confondu avec le plan médian de l'embase 1.

Pour limiter les effets de ramollissement des hautes températures de traitement sur les constituants du support et en particulier les filaments ressort, dont on souhaite conserver la raideur aussi constante que possible, il est préférable de prévoir que le matériau constitutif du support possède une température de transition vitreuse supérieure à ou égale 150°C.

La matière plastique utilisée peut en particulier être une résine copolymère polyacétale, par exemple celle connue sous la dénomination commerciale SNIATAL® du fabricant RHODIA, qui présente l'avantage de posséder une stabilité élevée lors de l'utilisation à haute température ainsi qu'une résistance chimique satisfaisante pour les applications de traitement envisagées. Elle possède les propriété suivantes :
- Module en flexion : 2670 MPa à 23°C,
- T° de fléchissement sous charge : 158°C sous 0.46 MPa.

Pour une réalisation pratique et sans insert de ce moulage, les filaments ressort 6, 7 s'étendent principalement suivant le plan médian de l'embase 1. De plus, dans la réalisation proposée, plusieurs symétrie ont été recherchées :
- l'ensemble du support admet pour plan de symétrie le plan contenant l'axe central 100 de l'embase 1 et la direction 101 de translation du plot mobile 4 ;
- le plan médian de l'embase 1, plan de joint, constitue un plan de symétrie pour la majeure partie de l'embase 1, y compris les saillies 40, 41 de liaison des plots fixes 2, 3, mais à l'exclusion de la glissière 13,
- les plots 2, 3, 4, à l'exclusion du tiroir 12 associé au plot mobile 4,
   et
- les filaments ressort 6, 7.

On notera par ailleurs que les deux parties, tiroir 12 et glissière 13, du moyen de blocage et de guidage sont réalisées d'un seul tenant moulé avec le reste du support. La configuration de désengagement du tiroir 12 vis-à-vis de la glissière 13 en position de repos permet leur moulage en une seule opération avec l'ensemble du support.

Le support qui vient d'être décrit est, selon l'invention, destiné à être utilisé pour le traitement de surface d'une lentille, notamment par centrifugation. En service, tel qu'illustré par la figure 4, la lentille optique 50 est simplement insérée, par sa tranche 51, entre les deux plots fixes 2, 3 et le plot mobile 4. Ce dernier aura préalablement été sollicité radialement, vers l'extérieur, à l'encontre des l'effort de rappel exercé par les filaments ressort 6, 7.

Le plot mobile 4 est ensuite relâché et, sous l'action des filaments ressort 6, 7, se rétracte contre la tranche 51 de la lentille 50. La lentille 50 est ainsi maintenue serrée par sa tranche 51 entre le plot mobile 4 et les plots fixes 2, 3.

Le support portant la lentille est ensuite rapporté sur ou dans l'élément adéquat de la machine de traitement utilisée (non représentée). L'embase 1 sert d'interface avec cet élément de machine et est agencée en conséquence quant à sa forme, ses dimensions et se aménagements spécifiques éventuels (rainure, épaulement, etc.). Dans le cas d'un dépôt d'une couche de revêtement par centrifugation, l'embase peut revêtir la forme particulière précédemment décrite et illustrée par les figures, à savoir une forme générale de rondelle présentant deux faces d'appui (« supérieure » et « inférieure ») larges offrant une bonne assise sur la platine de la machine de centrifugation.

Pour un traitement double face, il suffit de retourner le support. Grâce à la forme annulaire de l'embase la lentille est également accessible par ses deux faces.

D'autre part, conformément à l'invention, le support monobloc obtenu directement de moulage se prête particulièrement à une mise en oeuvre du type à usage unique. Il est alors dédié au traitement d'une lentille unique et est abandonné à l'issue du traitement de cette lentille sur une ou deux faces. Une telle mise en oeuvre à usage unique du support est rendue possible du fait de sa constitution et de son mode d'obtention en une seule pièce monobloc, qui induisent de faibles coûts de fabrication et autorisent un recyclage aisé. On comprend aussi que cet usage unique est avantageux sur le plan de la logistique, principalement en ce qu'il simplifie les manipulations (manuelles ou automatisées du support) et, surtout, évite toute étape du nettoyage du support, au profit de la sécurité de l'environnement et des personnes (vis-à-vis des produits chimiques de nettoyage), ainsi que de la simplicité et de la fluidité des cycles de traitement et, dès lors, d'un moindre coût.

L'embase porte alors avantageusement une marque d'identification individuelle du verre, venue de moulage. Cette marque peut par exemple revêtir la forme d'un code à barres. On peut ainsi utiliser cette marque d'identification, associée à chaque verre particulier et, partant, aux traitements qu'il doit subir, pour assurer le suivi de verre, tant en terme de logistique qu'en ce qui concerne le procédé de traitement. Il est ainsi en particulier possible d'individualiser les différentes opérations de traitement à appliquer à chaque verre au sein d'une installation multi-procédés. Il est aussi possible, grâce au marquage individuel, d'aiguiller chaque verre vers les postes dédiés aux opérations de traitement demandées pour le verre en question. Cet aiguillage peut être effectué au sein d'un site de traitement unique ou entre plusieurs sites délocalisés.

## Revendications

1. Support individuel de lentille optique comportant;
- une embase (1) de forme globalement annulaire ayant un axe central (100) et un plan médian perpendiculaire à cet axe central,au moins trois plots (2, 3, 4 ; 52, 53, 54) ménagés en saillie du bord intérieur (5) de l'embase (1) pour maintenir la lentille par sa tranche, l'un (4) au moins de ces plots étant élastiquement mobile en translation suivant une direction (101) radiale par rapport audit axe, entre une position intérieure de repos et une plage de positions extérieures actives,
- un ressort (6, 7) agencé entre le plot mobile (4) et l'embase (1) pour exercer un effort de rappel élastique du plot mobile (4) vers sa position de repos.
**caractérisé par le fait qu'**il comporte un moyen de blocage axial (12,13) pour le maintien du plot mobile (4), au moins lorsqu'il est en position active, dans une position axiale fixe tout en lui laissant sa mobilité radiale, et que l'ensemble dudit support, avec l'embase (1), les plots (2, 3, 4), le ressort (6, 7) et le moyen de blocage axial (12, 13), est réalisé en une seule pièce monobloc en matière plastique venue directement de moulage.

2. Support selon la revendication 1, dans lequel l'embase (1) présente une forme aplatie, avec une épaisseur très sensiblement inférieure à sa largeur.

3. Support selon l'une des revendications précédentes, dans lequel le ressort (6, 7) comporte au moins un filament de matière (6, 7) dont le brin neutre s'étend dans un plan parallèle au plan médian de l'embase (1).

4. Support selon la revendication 3, dans lequel le plan du brin neutre du filament de matière (6, 7) se confond avec le plan médian de l'embase (1).

5. Support selon la revendication 4, dans lequel le plan médian de l'embase (1) forme plan de joint.

6. Support selon l'une des revendications 3 à 5, dans lequel le ressort est réalisé sous la forme de deux filaments de matière (6, 7), symétriques l'un de l'autre par rapport à un plan de symétrie contenant l'axe central (100) de l'embase et la direction de translation (101) du plot mobile (4).

7. Support selon la revendication 6, dans lequel chaque filament (6, 7) présente au moins une partie non rectiligne (10, 11), courbée ou brisée,

8. Support selon la revendication 7, dans lequel chaque filament ressort (6, 7) présente une partie ondulée (10, 11).

9. Support selon la revendication 8, dans lequel la partie ondulée (10, 11) de chaque filament ressort (6, 7) est adjacente au plot mobile (4) concerné, tandis que le reste du filament est constitué par une partie rectiligne (8, 9) qui se raccorde au bord intérieur (5) de l'embase (1).

10. Support selon la revendication 9, dans lequel la partie rectiligne (8, 9) de chaque filament ressort (6, 7) forme avec le plan de symétrie, du côté intérieur de l'embase (1), un angle aigu (α).

11. Support selon l'une des revendications 8 à 10, dans lequel la partie ondulée de chaque filament ressort (6, 7) est constituée d'un pli unique (10, 11).

12. Support selon l'une des revendications précédentes, dans lequel le moyen de blocage axial (12, 13) est réalisé d'un seul tenant moulé avec le reste du support et comporte deux parties à engagement mutuel radial, l'une mobile (12) solidaire du plot mobile (4) et l'autre fixe (13) solidaire de l'embase (1), agencées pour être désengagées l'une de l'autre en position de repos du plot mobile et pour s'engager l'une avec l'autre en position active.

13. Support selon la revendication 12, dans lequel le ressort (6, 7) comporte au moins un filament de matière ayant une partie ondulée (10, 11) qui se raccorde à la partie mobile (12) du moyen de blocage solidaire du plot mobile (4).

14. Support selon l'une des revendications 12 et 13, dans lequel le moyen de blocage axial (12, 13) exerce de plus un guidage radial, ses deux parties étant complémentaires pour réaliser, lorsqu'elles sont mutuellement engagées, une liaison à coulissement radial.

15. Support selon l'une des revendications 12 à 14, dans lequel, lorsque le support est dans son état initial brut de moulage et donc en position de repos, les deux parties (12, 13) du moyen de blocage sont reliées l'une à l'autre par au moins un filet de matière (31, 32) de faible résistance mécanique, c'est-à-dire apte à être rompu par l'exercice d'un effort radial manuel provoquant l'engagement mutuel des deux parties (12, 13).

16. Support selon l'une des revendications précédentes, dans lequel, au moins deux plots (2, 3) étant fixes sur l'embase (1), les plots (2, 3, 4) sont agencés de telle sorte que, pour un diamètre de lentille pouvant varier sur une plage de 5 mm, le plot mobile (4) peut se déplacer sur une course de 6 mm vers l'extérieur depuis sa position de repos, ces valeurs étant données à 20 % près, la tranche de la lentille, circulaire pouvant être par rapport à l'axe central (100) de l'embase, soit axée, soit désaxée vers les deux plots fixes (2, 3).

17. Support selon l'une des revendications précédentes, dans lequel le matériau constitutif du support est choisi et le ressort (6, 7) est agencé de telle sorte que, pour une température ambiante comprise entre 15°C et 35°C, avec au moins 10 cycles de chauffage flash d'une vingtaine de secondes à 140°C, le module d'élasticité du ressort (6, 7) soit compris entre 3 N/mm et 10 N/mm.

18. Support selon l'une des revendications précédentes, dont le matériau possède une température de transition vitreuse supérieure ou égale à 150°C.

19. Support selon la revendication 18, dont le matériau est une résine acétal copolymère polyacétale, telle que celle connue sous la dénomination commerciale SNIATAL® du fabricant RHODIA.

20. Support selon l'une des revendications précédentes dans lequel, chaque plot (2, 3, 4 ; 52, 53, 54) possédant une face d'appui (35 ; 55) en regard de l'axe (100) de l'embase (1), l'un au moins des plots possède au moins une encoche (36, 37 ; 56) sur sa face d'appui.

## Claims

1. An individual carrier for an optical lens comprising:
- a globally ring-shaped base (1) with a central axis (100) and a median plane perpendicular to such a central axis, at least three studs (2, 3, 4; 52, 53, 54) projecting from the internal edge (5) of the base (1) for holding the lens through its edge, at least one (4) of such studs being resiliently moveable in translation along a radial direction (101) relative to said axis, between an internal rest position and a range of active external positions, and
- a spring (6, 7) arranged between the moveable stud (4) and the base (1) for exerting a resilient return stress of the moveable stud (4) towards its rest position.
**characterized in that** it comprises an axial blocking means (12,13) for holding, at least when it is in an active position, the moveable stud (4) fixed in a stationary axial position while keeping its radial mobility and **in that** the assembly of said carrier with the base (1), the studs (2,3,4), the spring (6,7) and the axial blocking means (12,13), is made of one monobloc piece of plastic material directly obtained by molding.

2. A carrier according to claim 1, wherein the base (1) has a flattened shape with a thickness very substantially lower than its width.

3. A carrier according to one of the preceding claims, wherein the spring (6, 7) comprises at least a material filament (6, 7) the neutral strand of which extends in a plane parallel to the median plane of the base (1).

4. A carrier according to claim 3, wherein the plane of the neutral strand of the material filament (6, 7) meets the median plane of the base (1).

5. A carrier according to claim 4, wherein the median plane of the base (1) forms a junction plane.

6. A carrier according to one of claims 3 to 5, wherein the spring is made in the form of two material filaments (6, 7), symetrical one to the other relative to a symmetry plane containing the central axis (100) of the base and the translation direction (101) of the moveable stud (4).

7. A carrier according to claim 6, wherein each filament (6, 7) has at least one non rectilinear part (10, 11), curved or broken.

8. A carrier according to claim 7, wherein each spring filament (6, 7) has a corrugated part (10, 11).

9. A carrier according to claim 8, wherein the corrugated part (10, 11) of each spring filament (6, 7) is adjacent to the moveable stud (4) involved, whereas the remainder of the filament is made from a rectilinear part (8, 9) connected with the inner edge (5) of the base (1).

10. A carrier according to claim 9, wherein the rectilinear part (8, 9) of each spring filament (6, 7) forms with the symmetry plane, on the internal side of the base (1), an acute angle (α).

11. A carrier according to one of claims 8 to 10 wherein the corrugated part of each spring filament (6, 7) is made of a single ply (10, 11).

12. A carrier according to one of the preceding claims, wherein the axial blocking means (12, 13) is integrally moulded with the remainder of the carrier and comprises two parts with a radial mutual engagement, one moveable (12) integral with the moveable stud (4) and the other stationary (13) integral with the base (1), arranged to be disengaged one from the other in a rest position of the moveable stud and to engage with one another in an active position.

13. A carrier according to claim 12, wherein the spring (6,7) comprises at least a filament with a corrugated part (10,11) connected to the moveable part (12) of the blocking means which is integral with the moveable stud (4).

14. A carrier according to one of claims 12 and 13, wherein the axial blocking means (12, 13) additionally exerts a radial guiding action, both its parts being complementary in order to reach, when mutually engaged, a radial sliding connexion.

15. A carrier according to one of claims 12 to 14, wherein, when the carrier is in its rough initial condition of moulding and therefore, in a rest position, both parts (12, 13) of the blocking means are connected to one another by at least a thread (31, 32) of material having a low mechanical strength, i.e. able to be broken when a manual radial stress is exerted leading to the mutual engagement of both parts (12, 13).

16. A carrier according to one of the preceding claims, wherein at least two studs (2,3) being fixed on the base (1), the studs (2,3,4) are provided such that for a lens diameter liable to vary on a range of 5 mm, the moveable stud (4) is able to be moved along 6 mm towards the outer from the rest position thereof, said values being given within 20% of error, the edge of the circular lens being in the axis or outer the axis in accordance with the base central axis (100) towards the two fixed studs (2,3).

17. A carrier according to one of the preceding claims, wherein the constitutive material for the carrier is selected and the spring (6, 7) is arranged so that, at a room temperature in the range between 15°C and 35°C, with at least 10 cycles of flash heating for about 20 seconds at 140°C, the elastic modulus of the spring (6, 7) ranges between 3 N/mm and 10 N/mm.

18. A carrier according to one of the preceding claims, with its material having a glass transition temperature higher than or equal to 150°C.

19. A carrier according to claim 18, with its material being a polyacetal copolymeric resin, for example that known under the brand name SNIATAL® of RHODIA manufacturer.

20. A carrier according to one of the preceding claims, wherein each stud (2, 3, 4; 52, 53, 54) having an abutting side (35; 55) opposing the axe (100) of the base (1), at least one of the studs has at least one notch (36, 37; 56) on its abutment side.

## Patentansprüche

1. Halterung für eine optische Linse umfassend:
- einen im Wesentlichen ringförmigen Rahmen (1) mit einer Zentralachse (100) und einer Medianebene senkrecht zu der Zentralachse, zumindest drei Kontaktstellen (2, 3, 4 ; 52, 53, 54) von der Innenseite (5) des Rahmens (1) hervorstehend angeordnet um die Linse an ihrem Rand zu halten, wobei zumindest eine (4) der Kontaktstellen elastisch translatorisch beweglich entlang einer zu der Achse radialen Richtung (101) ist, zwischen einer inneren Ruhestellung und einem Bereich von äußeren, aktiven Positionen,
- eine Feder (6, 7), angeordnet zwischen der beweglichen Kontaktstelle (4) und dem Rahmen (1) zur Ausübung einer elastischen Rückstellkraft auf die bewegliche Kontaktstelle hin zu ihrer Ruhestellung,
**dadurch gekennzeichnet, dass** sie eine axiale Blockiereinrichtung (12, 13) aufweist um die beweglichen Kontaktstelle (4), zumindest wenn sie in der aktiven Position ist, in einer axial festen Position zu halten ohne dabei ihre radiale Beweglichkeit einzuschränken, und dadurch, dass die Gesamtheit der Halterung, mit dem Rahmen (1), den Kontaktstellen (2, 3, 4), der Feder (6, 7) und der axialen Blockiereinrichtung (12, 13) einstückig aus Kunststoff-Material umittelbar geformt ist.

2. Halterung gemäß Anspruch 1, bei der der Rahmen (1) eine abgeflachte Form mit einer wesentlich geringeren Dicke als Breite aufweist.

3. Halterung gemäß einem der vorangehenden Ansprüche, bei der die Feder (6, 7) zumindest ein Material-Filament (6, 7) aufweist, wobei sich ein Abschnitt parallel zur Medianebene des Rahmens (1) erstreckt.

4. Halterung gemäß Anspruch 3, bei der die Ebene des Abschnitts des Filaments (6, 7) mit der Medianebene des Rahmens (1) überlagert ist.

5. Halterung gemäß Anspruch 4, bei der die Medianebene des Rahmens (1) eine Dichtebene ausbildet.

6. Halterung gemäß einem der Ansprüche 3 bis 5, bei der die Feder in der Form von zwei Material-Filamenten (6, 7) realisiert ist, die zueinander symmetrisch bezüglich einer Symmetrieebene sind, welche die Zentralachse (100) des Rahmens und die Translationsrichtung (101) der beweglichen Kontaktstelle (4) enthält.

7. Halterung gemäß Anspruch 6, bei der jedes Filament (6, 7) zumindest einen nicht geradlinigen Abschnitt (10, 11) aufweist, der gekrümmt oder geknickt ist.

8. Halterung gemäß Anspruch 7, bei der jede Filament-Feder (6, 7) einen wellenförmigen Abschnitt (10, 11) aufweist.

9. Halterung gemäß Anspruch 8, bei der der gewellte Abschnitt (10, 11) von jeder Filament-Feder (6, 7) mit der betreffenden beweglichen Kontaktstelle (4) benachbart ist, wobei der Rest des Filaments aus einem geradlinigen Abschnitt gebildet ist (8, 9), der mit der Innenseite (5) des Rahmens (1) verbunden ist.

10. Halterung gemäß Anspruch 9, bei der der geradlinige Abschnitt (8, 9) von jeder Filament-Feder (6, 7) mit der Symmetrieebene auf der Innenseite des Rahmens (1) einen spitzen Winkel (α) ausbildet.

11. Halterung gemäß einem der Ansprüche 8 bis 10, bei der der wellenförmige Abschnitt (10, 11) von jeder Filament-Feder (6, 7) aus einer einzigen Faltung (10, 11) gebildet ist.

12. Halterung gemäß einem der vorangehenden Ansprüche, bei der die axiale Blockiereinrichtung (12, 13) einstückig ausgebildet ist, geformt mit dem Rest der Halterung und zwei wechselseitige radiale Eingreifenabschnitte aufweisend, beweglich der eine (12) und verbunden mit der beweglichen Kontaktstelle (4), festegesetzt der andere (13) und verbunden mit dem Rahmen (1), so angeordnet, dass der eine mit dem anderen in der Ruhestellung der beweglichen Kontaktstelle außer Eingriff steht und dass der eine mit dem anderen in aktiver Position in Eingriff steht.

13. Halterung gemäß Anspruch 12, bei der die Feder (6, 7) zumindest ein Material-Filament aufweist, das einen wellenförmigen Abschnitt hat, der mit dem beweglichen Abschnitt (12) der Blockiereinrichtung verbunden ist, welcher mit der beweglichen Kontaktstelle (4) verbunden ist.

14. Halterung gemäß einem der Ansprüche 12 oder 13, bei der die axiale Blockiereinrichtung (12, 13) zudem eine radial Führung ausbildet, wobei die zwei Abschnitte komplementär sind um, wenn diese in gegenseitigem Eingriff sind, eine radial gleitende Kopplung auszubilden.

15. Halterung gemäß einem der Ansprüche 12 bis 14, bei welcher, wenn die Halterung in einem anfänglichen Gussrohzustand und daher im Ruhezustand ist, die zwei Abschnitte (12, 13) der Blockiereinrichtung miteinander mit zumindest einem Material-Faden (31, 32) von geringem mechanischem Widerstand verbunden sind, d.h. geeignet um durch das Ausüben einer radialen Hand-Kraft gebrochen zu werden, die ein Ineinandergreifen der zwei Abschnitte (12, 13) provoziert.

16. Halterung gemäß einem der vorangehenden Ansprüche, bei welcher, wobei zumindest zwei Kontaktstellen (2, 3) an dem Rahmen (1) feststehend sind, die Kontaktstellen (2, 3, 4) so angeordnet sind, dass, damit ein Durchmesser der Linse in einem Bereich von 5 mm variieren kann, die bewegliche Kontaktstelle (4) versetzbar ist auf einer Bahn von 6 mm nach außen hin ausgehend von ihrer Ruhestellung, wobei diese Werte mit eine Genauigkeit von 20% gegeben sind und wobei der Rand der kreisförmigen Linse bezüglich der Zentralachse (100) des Rahmens ausgerichtet ist oder zu dieser einen Versatz aufweist, hin zu den zwei feststehenden Kontaktstellen (2, 3).

17. Halterung gemäß einem der vorangehenden Ansprüche, bei der das konstitutive Material der Halterung so gewählt und die Federn (6, 7) so angeordnet sind, dass für eine Umgebungstemperatur zwischen 15° C und 35° C, mit zumindest 10 Biltz-Aufwärmzyklen von in ungefähr 20 Sekunden auf 140 °C, der Elastizitätsmodul der Feder (6, 7) zwischen 3 N/mm und 10 N/mm ist.

18. Halterung gemäß einem der vorangehenden Ansprüche, bei der das Material eine Glasübergangstemperatur von 150°C oder mehr aufweist.

19. Halterung gemäß Anspruch 18, bei der das Material ein Acetal Copolymer Polyacetal Harz ist, so wie es unter dem kommerziellen Namen SNIATAL® des Herstellers RHODIA bekannt ist.

20. Halterung gemäß einem der vorangehenden Ansprüche, bei welcher zumindest eine der Kontaktstellen zumindest eine Einkerbung (36, 37 ; 56) an ihrer Anlagefläche aufweist, wobei jede Kontaktstelle (2, 3, 4; 52, 53, 54) eine der Achse (100) des Rahmens (1) gegenüberstehende Anlagefläche (35 ; 55) aufweist.
